# DEMANDE DE BREVET EUROPEEN

(11) **EP 1 036 818 A1**
(43) Date de publication de la demande: **20.09.2000**
(21) Numéro de dépôt: 00400712.6
(22) Date de dépôt: 15.03.2000
(51) Int. Cl.: C08L 61/24, C08L 61/28, C09D 161/24, C09D 161/28

(54) **Résines d'imprégnation aminoplastes, chargées, stables au stockage pour revêtements stratifiés**

(30) Priorité: 17.03.1999 FR 9903295
(71) Demandeur: Atofina, 92800 Puteaux (FR)
(72) Inventeur: Chenard, Jean-Yves, 64000 Pau (FR); El Bounia, Nour Eddine, 64300 Sainte Suzanne (FR); Loussayre, Frédéric, 60280 Margny Les Compiegne (FR)
(74) Mandataire: Rieux, Michel

(57) **Abrégé**

La présente invention porte sur une résine d'imprégnation aminoplaste chargée avec au moins une poudre minérale anti-abrasion, caractérisée par le fait qu'y ont été ajoutés au moins une charge fibreuse et au moins un agent épaississant soluble ou dispersible à l'état colloïdal dans ladite résine, la nature et la quantité de la ou des charges fibreuses et du ou des agents épaississants étant choisies pour que le système résine aminoplaste + charge minérale anti-abrasion ainsi modifié présente un comportement rhéologique pseudo-plastique ou essentiellement pseudo-plastique.

## Description

La présente invention porte sur des résines d'imprégnation aminoplastes chargées, stables au stockage pour revêtements stratifiés. Par résines aminoplastes, on entend tous les produits issus de la condensation de l'urée, de la mélamine et du formol.

Les revêtements stratifiés sont fabriqués par pressage à chaud d'un papier "décor" et optionnellement d'un ou plusieurs papiers "overlay" imprégnés de résines aminoplastes
- soit sur un support dérivé du bois (revêtements dits "basse pression") : panneaux de particules ou de fibres (MDF) ;
- soit sur un support Kraft/phénolique (revêtements dits "haute pression").

Le papier "décor" est un papier blanc opaque chargé, portant le motif décoratif imprimé (grammage typique : 70 - 80 gm⁻²).

Le papier "overlay" est un papier transparent constitué de cellulose α pure (grammage typique : 25 - 30 gm⁻², porosité élevée, pas de charge), servant à protéger le décor et à améliorer le fini de surface.

Le papier décor et le ou les papiers overlay sont, avant pressage, imprégnés à l'aide de résines aminoplastes mélamine/formol (MF) ou urée/formol (UF), qui possèdent le brillant, la transparence, la résistance mécanique et chimique et la tenue au vieillissement nécessaires. Pour l'application aux revêtements de sol, l'indispensable résistance à l'usure (abrasion, rayures, éraflures, etc.) est obtenue par ajout d'une poudre minérale de haute dureté, telle que le corindon ou la silice, de morphologie et de granulométrie convenables. Cette poudre minérale doit :
- être présente en quantité suffisante ;
- être répartie de façon aussi uniforme que possible ; et
- préserver l'aspect visuel des panneaux.

Il existe un grand nombre de procédés permettant d'incorporer cette charge dure au revêtement, à tous les stades de sa fabrication.

La présente invention concerne la formulation et la mise en oeuvre de résines d'imprégnation aminoplastes chargées pour papiers décor et/ou overlay à caractéristiques améliorées. L'utilisation des résines d'imprégnation aminoplastes chargées avec une poudre minérale dure pour obtenir des revêtements stratifiés ayant une résistance à l'usure améliorée est bien connue, que ces résines soient appliquées directement sur un papier non imprégné (cf. US-A-3 525 664, par exemple), ou en deuxième enduction d'un papier déjà enrésiné à l'aide d'une résine standard (cf. US-A-3 135 643, par exemple). Dans la pratique, l'utilisation des résines chargées se heurte toutefois au problème de la stabilité des suspensions obtenues. La différence de densité importante entre la charge minérale et la résine d'imprégnation conduit le plus souvent à une décantation rapide qui ne permet d'obtenir à la surface du papier :
- ni une répartition uniforme de la charge ;
- ni un grammage en charge constant pendant toute la durée d'une imprégnation.

La résine chargée doit être en outre maintenue sous agitation constante et/ou être utilisée immédiatement après fabrication. Ce phénomène de décantation est d'autant plus dur à combattre :
- que la tenue à l'abrasion désirée est élevée, ce qui nécessite l'utilisation d'une charge assez grossière (diamètre moyen de plusieurs dizaines de microns) ; et
- que la viscosité des résines d'imprégnation est faible, une faible viscosité étant préférée car elle permet de préserver une vitesse d'imprégnation suffisante.

Un certain nombre de solutions à ce problème ont été proposées ; ainsi, la demande de brevet allemand DE-A-195 08 797 propose de rajouter à une résine mélamine-formol (MF) des quantités importantes (15 - 25% en poids) de fibres coupées de cellulose α de faible longueur (inférieure à 40 µm), afin de "fixer" le corindon et de ralentir sa décantation. La viscosité du mélange est toutefois maintenue à une valeur assez faible par dilution à l'eau.

Le brevet américain US-A-5 344 704 propose de mélanger à la charge minérale des particules solides de résine MF obtenues par réticulation d'une résine MF liquide et broyage.

La demande de brevet allemand DE-A-197 10 619 décrit l'utilisation de grains de corindon enrobés d'une couche de résine, fabriqués par atomisation.

Cependant, aucune des propositions précitées ne résout vraiment le problème de la décantation des charges. La stabilité des suspensions obtenues est au mieux de quelques heures ; en outre, certaines des solutions précédentes présentent d'autres inconvénients en ce qui concerne la mise en oeuvre ou l'aspect des panneaux finis.

La présente invention a pour objectif de proposer une solution améliorée au problème de la décantation des charges en proposant une formulation et une mise en oeuvre de résines aminoplastes chargées pour revêtements stratifiés, stables au stockage à 25°C, sans décantation des charges pendant toute la durée pratique d'utilisation des résines urée-formol (UF) et mélamine-formol (MF) de base, c'est-à-dire pendant plusieurs semaines. A l'aide de procédés de dépose adaptés, les résines selon l'invention permettent d'obtenir une répartition uniforme et surtout constante pendant toute la durée d'une imprégnation de la charge dure à la surface des papiers décor ou overlay. Les résines selon l'invention assurent un transfert quantitatif sur le papier de la charge minérale dure (corindon) contenue dans la résine. Il n'est en outre plus nécessaire d'agiter ces résines en permanence ni de les utiliser immédiatement après leur fabrication, ce qui facilite leur mise en oeuvre.

La présente invention a donc pour objet une résine d'imprégnation aminoplaste chargée avec au moins une poudre minérale anti-abrasion, caractérisée par le fait qu'y ont été ajoutés au moins une charge fibreuse et au moins un agent épaississant soluble ou dispersible à l'état colloïdal dans ladite résine, la nature et la quantité de la ou des charges fibreuses et du ou des agents épaississants étant choisies pour que le système résine aminoplaste + charge minérale anti-abrasion ainsi modifié présente un comportement rhéologique pseudo-plastique ou essentiellement pseudo-plastique.

Ainsi, les résines selon l'invention présentent un comportement rhéologique fortement pseudo-plastique, c'est-à-dire que leur viscosité varie fortement selon la vitesse de cisaillement choisie. Plus précisément, ces résines chargées seront mises au point de façon à présenter tout à la fois :
- une viscosité élevée au repos, au moins égale à 50 000 mPa.s à 0,07 s⁻¹ ;
- une viscosité chutant rapidement sous cisaillement élevé, au plus égale à 1000 mPa.s, de préférence au plus égale à 500 mPa.s à 1000 s⁻¹ par exemple ; et
- une remontée en viscosité rapide dès que le cisaillement cesse.

Il est de ce fait possible de déposer les résines chargées selon l'invention par des procédés d'imprégnation ou d'enduction adaptés, tout en évitant au repos toute décantation significative des charges utilisées.

On va maintenant décrire les différents ingrédients composant les résines chargées de l'invention.

### (A)- Résine aminoplaste de base

La résine aminoplaste de base est, notamment, une résine mélamine-formol, en particulier une résine mélamine-formol ayant les caractéristiques suivantes :
- F/NH₂ = 0,45 - 0,60
- Extrait sec à 105°C = 55 - 65%
- Viscosité = 50 - 150 mPa.s à 20°C
- pH = 9,5 - 10,5.

Lorsque la résine chargée selon l'invention ne constitue pas la couche la plus externe du revêtement stratifié notamment, on peut aussi faire appel à des résines urée-formol d'imprégnation ayant les caractéristiques typiques suivantes :
- F/NH₂ = 0,5-0,8
- Extrait sec = 45-55%
- Viscosité = 20-100 mPa.s à 20°C
- pH = 7 - 9.

De telles résines sont disponibles dans le commerce, par exemple auprès de la Société "ELF ATOCHEM" sous la marque "PRESSAMINE". Ces résines sont utilisées sans dilution par de l'eau.

### (B)- Poudres minérales anti-abrasion

Ces poudres sont notamment des poudres ayant une dureté au moins égale à 7 en échelle Moh. Les charges préférées sont la silice cristalline (quartz) et, plus particulièrement, l'alumine alpha (corindon).

Afin d'assurer une teneur optimale à l'abrasion, le corindon préféré se présente sous la forme d'une poudre à grains équiaxes de diamètre moyen compris entre 10 et 125 µm, de préférence entre 25 et 75 µm. De tels corindons sont disponibles dans le commerce, par exemple auprès de la Société "PECHINEY ÉLECTRO MÉTALLURGIE" sous la marque "CRISTALBA", série FEPA F600 à F100 pour les poudres de diamètre moyen compris entre 10 et 125 µm, et série FEPA F360 à F180, pour les poudres de diamètre moyen compris entre 25 et 75 µm. On peut obtenir une résistance à l'usure améliorée en ajoutant au corindon précédent une faible proportion, par exemple inférieure à 15% en poids par rapport au corindon total, d'un corindon de même type, mais d'une granulométrie plus fine (par exemple d'un diamètre moyen compris entre 1 et 5 µm).

La teneur en charge anti-abrasion totale des résines chargées selon l'invention peut varier de 5 à 30% en poids selon la tenue à l'abrasion désirée.

### (C)- Charges fibreuses

La ou les charges fibreuses peuvent avoir une longueur moyenne comprise entre 50 et 200 microns.

Comme exemples de charges fibreuses, on peut indiquer les fibres coupées de cellulose α, par exemple celles commercialisées par la Société "RETTENMAIER" sous la dénomination "ARBOCEL", ainsi que les fibres de cellulose microcristalline, par exemple celles commercialisées par la Société "FMC Corp." sous la dénomination "AVICEL PH/Lattice NT".

La ou les charges fibreuses sont généralement utilisées à raison de 5 à 15% en poids par rapport à la résine aminoplaste de base seule.

La charge fibreuse assure l'essentiel du comportement pseudo-plastique recherché. Elle permet aussi de réduire l'usure des équipements de mise en oeuvre (plateaux de presse en particulier) due à la présence de charges dures. Sans sortir du domaine de concentration précité, la ou les charges fibreuses doivent être utilisées à une teneur minimale qui dépend :
- de leur longueur moyenne ;
- de la teneur en agent épaississant retenue ;
- du taux et du type de charge minérale anti-abrasion (corindon) ; et
- de la nature de la résine aminoplaste.

De façon générale, la teneur minimale en fibres est d'autant plus élevée que les fibres sont courtes. On peut ainsi indiquer que la fibre "ARBOCEL BE00" (longueur moyenne = 120 µm) sera utilisée à une teneur moyenne de 7,5 - 8,5%, alors que la fibre AVICEL PH101 (longueur moyenne = 50 µm), sera plutôt utilisée à des teneurs supérieures ou égales à 10%.

L'incorporation de la charge fibreuse peut être réalisée avec un réacteur équipé d'un agitateur à ancre tournant à 50 - 500 t/min. Dans le cas de la cellulose microcristalline, toutefois, on utilisera, de préférence, un disperseur à fort taux de cisaillement, tel qu'un disque défloculeur tournant à grande vitesse (par exemple 1000 - 2000 t/min.).

### (D)- Agents épaississants

Les agents épaississants préférés sont :
- soit des éthers cellulosiques, utilisés à une teneur de 0,05 à 1%, de préférence de 0,1 à 0,5%, en poids, par rapport à la résine aminoplaste de base seule ; à titre d'exemples de tels éthers cellulosiques, on peut citer ceux commercialisés par la Société "BEROL NOBEL" sous la désignation "BERMOCOLL" ;
- soit des celluloses microcristallines colloïdales, à une teneur de 0,1 à 5%, de préférence de 0,5 à 1% en poids, par rapport à la résine aminoplaste de base seule ; à titre d'exemples de telles celluloses microcristallines colloïdales, on peut citer celles commercialisées par la Société "FMC Corp." sous la dénomination "AVICEL CL/Lattice NTC".

L'agent épaississant est indispensable pour obtenir une bonne stabilité au stockage des résines chargées selon l'invention. Il permet de supprimer, en particulier, le phénomène de décantation du mélange fibres + poudre minérale anti-abrasion, fait fréquemment constaté avec la charge fibreuse seule. L'agent épaississant permet, en outre, d'améliorer l'aspect visuel et la tenue à l'abrasion des revêtements obtenus :
- d'une part, parce qu'il diminue la teneur minimale en fibres nécessaire et facilite leur dispersion ; et
- d'autre part, parce qu'il permet la dépose d'un film de résine chargée plus uniforme lors de l'imprégnation et de l'enduction (amélioration du pouvoir "liant" de la résine).

### (E)- Additifs

Les résines chargées selon l'invention peuvent en outre contenir un certain nombre d'additifs classiquement utilisés tels qu'agents mouillants ou tensio-actifs, promoteurs d'adhésion (comme les silanes), lubrifiants liquides, solides ou agents anti-statiques.

La présente invention concerne aussi les résines d'imprégnation aminoplastes, telles qu'elles viennent d'être définies, dans lesquelles on a incorporé au moins un durcisseur latent, à raison notamment de 0,1 à 1% en poids par rapport à la résine aminoplaste de base seule. Comme exemple de durcisseurs latents, on peut indiquer les sels d'acides minéraux ou organiques neutralisés par une base afin d'obtenir la latence nécessaire à 25°C. On peut citer, à titre d'exemple, la solution aqueuse de p-toluène sulfonate de morpholine.

Enfin, l'invention porte sur un revêtement stratifié obtenu par pressage à chaud sur un support d'un papier opaque portant un motif décoratif imprimé, ou papier décor, ledit papier décor pouvant être recouvert par au moins un papier transparent de protection, ou papier overlay, au moins l'un parmi le papier décor et le ou les papiers overlay ayant été enduit, le cas échéant en seconde enduction, par la résine aminoplaste d'imprégnation comportant le durcisseur latent, comme indiqué ci-dessus.

Ainsi, les résines chargées selon l'invention peuvent être appliquées soit sur le papier décor, soit sur le ou les papiers overlay.

Dans le premier cas, la résine chargée de l'invention est, de préférence, utilisée en deuxième enduction d'un papier décor préalablement enrésiné avec une résine standard et partiellement séché. Du fait de sa viscosité, la résine chargée selon l'invention ne permettrait pas, en effet, d'imprégner un papier décor vierge à une vitesse compatible avec les cadences de production industrielle. L'enduction est réalisée sur le seul côté portant le motif décoratif. Les taux d'enrésinement typiques pour un papier décor de 80 gm⁻² sont :
- de 80 à 120 gm⁻² en résine standard sèche ; et
- de 40 à 100 gm⁻², de préférence de 50 à 80 gm⁻², en résine chargée selon l'invention sèche,
soit un enrésinement total de 130 à 220 gm⁻², de préférence de 140 à 170 gm⁻². Le papier décor ainsi obtenu peut être appelé "papier décor renforcé corindon".

Dans le second cas, les résines chargées selon l'invention peuvent être utilisées en première imprégnation grâce à la forte porosité et au faible grammage des papiers overlay. Toutefois, une dépose en deuxième enduction, comme dans le cas du papier décor, reste possible. Le taux d'enrésinement typique pour un papier overlay de 25 gm⁻² est de 70 à 100 gm⁻² en résine chargée sèche selon l'invention. On obtient ainsi un "overlay renforcé corindon".

La dépose des résines selon l'invention peut être effectuée à l'aide, soit d'enducteurs mono- ou bi-cylindres de divers types, soit d'applicateurs à buse munis d'une racle. Les papiers une fois imprégnés ou enduits sont séchés sous courant d'air chaud. La teneur en humidité des papiers imprégnés prêts à l'emploi doit être de 8% environ.

Les revêtements stratifiés selon l'invention comprennent le plus souvent soit un papier décor renforcé corindon selon l'invention seul, soit un papier décor renforcé corindon selon l'invention + un papier overlay standard, soit un papier décor standard + un overlay renforcé corindon selon l'invention.

La tenue à l'abrasion de tels revêtements (IP TABER, cf. ci-après) est typiquement supérieure ou égale à 6000 t pour un grammage déposé de 10 gm⁻² d'un corindon "CRISTALBA F240".

Pour obtenir des résistances à l'abrasion plus élevées, on peut avoir recours aux empilements suivants :
- un papier décor standard + plusieurs overlays renforcés corindon selon l'invention ; ou
- un papier décor renforcé corindon selon l'invention + un overlay renforcé corindon selon l'invention.

Les Exemples suivants illustrent la présente invention sans toutefois en limiter la portée. Dans ces Exemples, les parties et pourcentages sont en poids, sauf indication contraire. Par ailleurs, dans ces Exemples :
- la résine mélamine-formol utilisée est celle commercialisée par la Société "ELF ATOCHEM" sous la dénomination "PRESSAMINE® M503" ;
- les charges fibreuses utilisées sont :
   - ou bien les fibres coupées de cellulose α, de longueur moyenne 120 µm, commercialisées par la Société "RETTENMAIER" sous la dénomination "ARBOCELL BE00" ;
   - ou bien les fibres de cellulose microcristalline, de longueur moyenne 50 µm, commercialisées par la Société "FMC Corp." sous la dénomination "AVICEL PH101",
- les agents épaississants utilisés sont :
   - ou bien l'éther cellulosique (en poudre) commercialisé par la Société "BEROL NOBEL" sous la dénomination "BERMOCOLL E451" ;
   - ou bien la cellulose microcristalline colloïdale commercialisée par la Société "FMC Corp." sous la dénomination "AVICEL CL611" ;
- le corindon utilisé est celui commercialisé par la Société "PÉCHINEY ÉLECTRO MÉTALLURGIE" sous la dénomination "CRISTALBA® CAHPF 240" ; et
- le durcisseur utilisé est une solution aqueuse à 77% en poids de p-toluène sulfonate de morpholine.

Les résistances à l'abrasion auxquelles il est fait référence ci-après ont été mesurées à l'aide d'un abrasimètre TABER conformément à la norme EN 438, avec changement de papiers de verre tous les 500 tours. Les chiffres indiqués sont les points d'usure initiaux (IP), tels que définis dans la norme.

Les viscosités indiquées ont été mesurées à l'aide d'un viscosimètre à cylindres coaxiaux (solides DIN).

### EXEMPLES DE PRÉPARATION 1 à 8 (de l'invention)

### Mode opératoire général

On prépare une résine de l'invention en mélangeant de la façon suivante les constituants, dans les quantités (en g) indiquées dans le Tableau 1 ci-après.

La résine mélamine-formol est versée à 25°C dans un réacteur de 2 litres muni d'un agitateur à ancre. La vitesse d'agitation est réglée à 500 t/min. On verse sous agitation l'agent épaississant. On poursuit l'agitation jusqu'à dissolution complète. La viscosité du mélange à ce stade est généralement de l'ordre de 300 - 2000 mPa.s (25°C, 6,65 s⁻¹). On ajoute alors la charge fibreuse. Après 30 minutes d'agitation, la viscosité mesurée dans les mêmes conditions que précédemment est généralement de l'ordre de 500 - 10 000 mPa.s. On ajoute le corindon, toujours sous agitation. Après homogénéisation, la viscosité est généralement de l'ordre de 1200 - 12 000 mPa.s. Le pH du milieu réactionnel est, pour terminer, ramené à sa valeur initiale (soit 9,8) à l'aide de soude concentrée.

La variation des viscosités obtenues en fonction du gradient de cisaillement figure dans le Tableau 2 ci-après. On remarque la forte pseudo-plasticité des résines selon l'invention même avant rajout du corindon. Les viscosités à 0,07 s⁻¹ sont généralement supérieures ou égales à 50 000 mPa.s ; les viscosités à 1000 s⁻¹ sont inférieures à 1000 mPa.s.

### EXEMPLES DE PRÉPARATION COMPARATIFS 9 à 13

On procède comme pour les Exemples 1 à 8 de l'invention, excepté que :
- l'on n'incorpore pas de charge fibreuse (Exemple Comparatif 9) ; ou
- l'on n'incorpore pas suffisamment de charge fibreuse pour obtenir le comportement rhéologique pseudo-plastique recherché (Exemples comparatifs 10 et 11) ; ou
- l'on n'incorpore pas d'agent épaississant (Exemples comparatifs 12 et 13).

Les quantités de chaque formulation sont, comme précédemment, rapportées dans le Tableau 1.

### EXEMPLE D'ESSAI 14 : Stabilité au stockage des mélanges selon l'invention et comparatifs

### (1) Protocole d'essai

### (1a) Sur les mélanges obtenus comme indiqué dans les Exemples 1 à 13 (sans ajout de durcisseur)

50 g de chacun de ces mélanges sont versés dans un tube à essai. Ces tubes sont conservés en position verticale à 25°C. Du fait de l'absence de durcisseur, il n'y a pas de gélification même après plusieurs semaines de stockage. Au terme du délai indiqué dans le Tableau 3, on prélève des échantillons de 5 g environ de chaque mélange liquide aux extrémités haute et basse de chaque tube et on dose la teneur en corindon de chaque échantillon.

### (1b) Sur ces mêmes mélanges après incorporation du durcisseur

50 g de chacun de ces mélanges auxquels on a préalablement ajouté 0,5% en poids du durcisseur par rapport à la résine mélamine-formol seule, sont versés dans un tube à essai. Ces tubes sont conservés en position verticale à 25°C jusqu'à gélification, ce qui demande environ trois jours. On prélève alors séparément des échantillons de 5 g environ aux extrémités haute et basse de chaque tube, et on dose la teneur en corindon de chaque échantillon.

### (2) Expression des résultats

Les résultats sont indiqués dans le Tableau 3 ci-après.
- s'il y a décantation du corindon seul, les teneurs en corindon mesurées en haut et en bas du tube sont alors significativement différentes ;
- s'il y a décantation du mélange fibres + corindon, on constate dans ce cas la présence, en haut du tube, d'une couche de résine transparente. Les teneurs en corindon mesurées sont supérieures à la valeur théorique attendue (15%) sans qu'il y ait nécessairement un écart important entre les teneurs trouvées pour le haut et le bas du tube.

### EXEMPLES D'APPLICATION 15 et 16

### Mode opératoire général

### (a) Imprégnation d'un papier décor

Un papier décor de 80 gm⁻² est imprégné classiquement avec une formulation standard de composition :
- Résine mélamine-formol 100 parties
- Durcisseur 0,5 partie
puis laminé et séché dans un tunnel à air chaud dans les conditions de durée et de température indiquées dans le Tableau 4.

Le taux d'enrésinement du papier imprégné obtenu et son taux résiduel d'humidité sont tels qu'indiqués dans le Tableau 4.

### (b1) Enduction du papier décor imprégné par une résine chargée de l'invention (Exemple d'application 15)

Le papier décor imprégné obtenu à l'étape (a) est alors enduit sur sa face imprimée à l'aide d'une résine chargée de l'invention, telle qu'indiquée dans le Tableau 4, catalysée par 0,5% du durcisseur par rapport à la résine mélamine-formol seule.

Le revêtement est calibré par laminage entre deux barres cylindriques de 2,5 kg, puis séché pendant 120 s à 120°C. Le taux d'enrésinement correspondant à cette étape est indiqué dans le Tableau 4.

Dans ce dernier, sont également indiqués le taux d'enrésinement final du papier obtenu et son taux d'humidité résiduel.

### (b2) Recouvrement du papier décor imprégné par un papier overlay renforcé par une résine chargée de l'invention (Exemple d'application 16)

Un papier overlay de 25 gm⁻² est imprégné à l'aide d'une résine chargée de l'invention, telle qu'indiquée dans le Tableau 4, catalysée par 0,5% du durcisseur par rapport à la résine mélamine-formol seule. Le papier overlay est alors laminé par passage entre deux barres cylindriques, puis séché pendant 120 s à 120°C. Le taux d'enrésinement du papier overlay imprégné obtenu est indiqué dans le Tableau 4, avec sa teneur surfacique en corindon.

Le papier décor imprégné obtenu à l'étape (a) est ensuite recouvert à l'aide du papier overlay imprégné tel qu'obtenu ci-dessus.

### (b) Résistances à l'abrasion obtenues

Le papier décor renforcé corindon de l'Exemple 15 ou le papier décor recouvert de l'overlay renforcé selon l'Exemple 16 est alors pressé à chaud pendant 45 s à 190°C sous 3 MPa (30 bars) sur un panneau de fibres MDF de 9 mm d'épaisseur, dont la face opposée a été simultanément revêtue d'un papier imprégné, dit de balancement, afin d'éviter tout gauchissement du panneau stratifié lors de son refroidissement.

Après conditionnement, la tenue à l'abrasion du panneau obtenu est évaluée à l'aide d'un abrasimètre TABER conformément à la norme EN438. Le point initial d'usure (IP) moyen est également indiqué dans le Tableau 4.

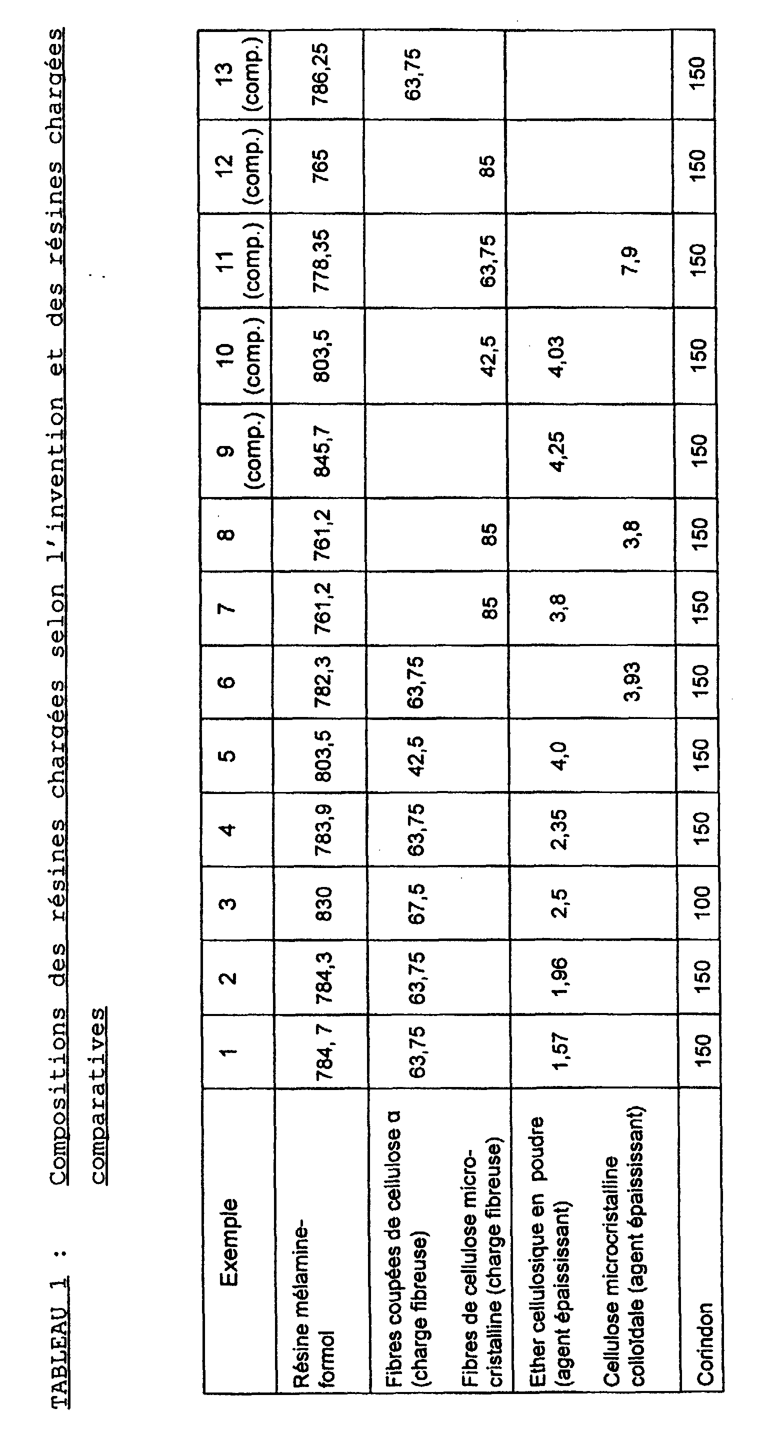

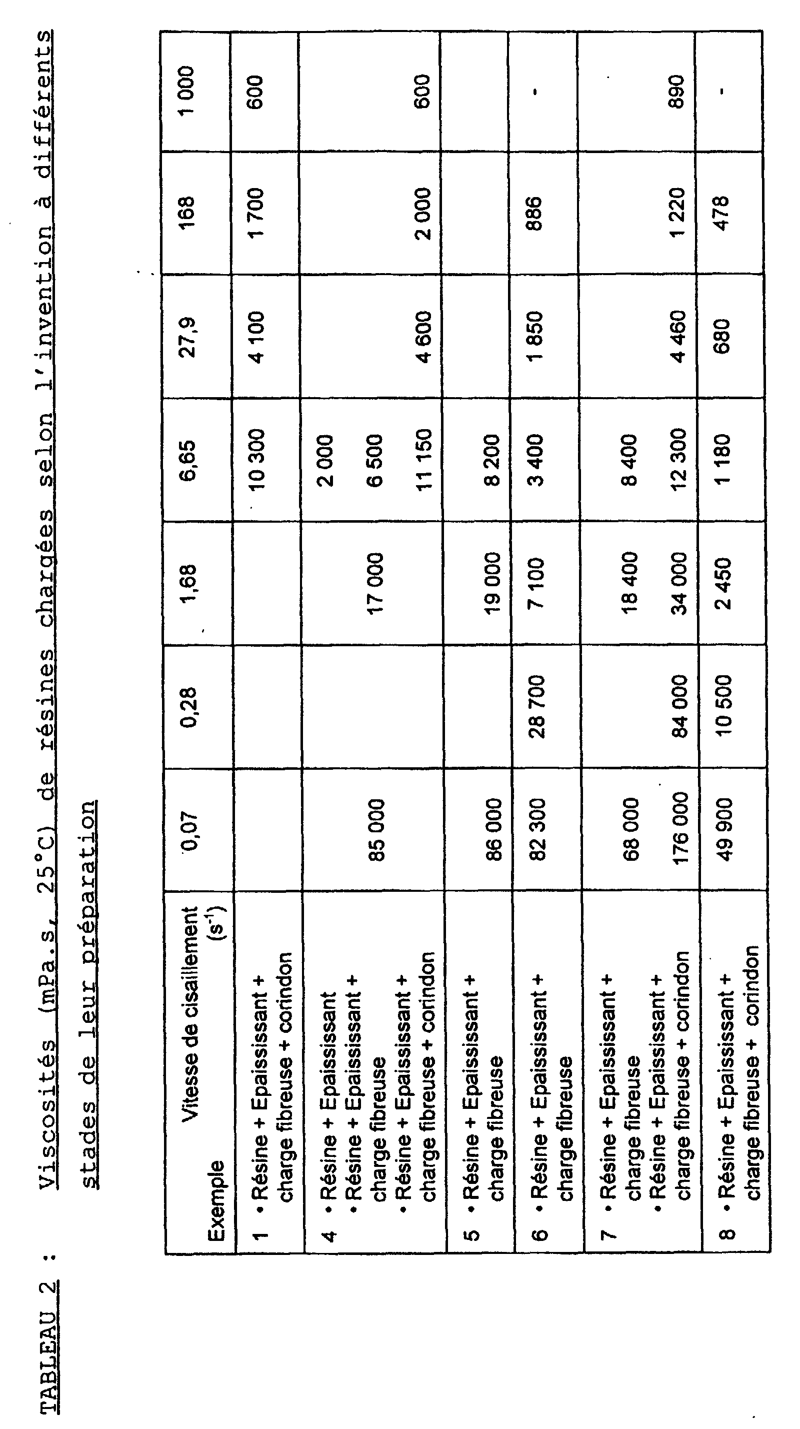

**Tableau 3 :**

| Etude de la vitesse de décantation à 25°C des mélanges selon l'invention et comparatifs sans durcisseur et avec durcisseur. | | | | | | |
|---|---|---|---|---|---|---|
| Exemple | Teneur en corindon (%) | | | | Présence d'une phase de résine surnageante | Stabilité au stockage |
| | sans durcisseur | | avec durcisseur | | | |
| | haut | bas | haut | bas | | |
| 1 | - | - | 14,3 | 15,2 | non | assez bonne |
| 2 | 13,5 (18 j) | 16,4 (18 j) | 15,7 | 16,2 | non | bonne |
| 4 | - | 16 (10 j) | 15,3 | 15,4 | non | excellente |
| 5 | - | - | 15,0 | 16,0 | non | assez bonne |
| 6 | 15,1 (10 j) | 15,6 (10 j) | 15,8 | 16,0 | non | excellente |
| 7 | - | - | 15,2 | 15,4 | non | excellente |
| 8 | - | 15,3 (10 j) | 15,7 | 16,0 | non | excellente |
| 9 (comp.) | - | - | 10,2 | 24,5 | non | mauvaise (décantation du corindon) |
| 10 (comp.) | - | - | 8,4 | 14,5 | non | mauvaise (décantation du corindon) |
| 11 (comp.) | - | - | 7,1 | 31,8 | non | mauvaise (décantation du corindon) |
| 12 (comp.) | 20 (3 j) | 23 (3 j) | 14,4 | 16,4 | oui | mauvaise (décantation du mélange : fibres + corindon) |
| 13 (comp.) | 17,4 (7 j) | 18,3 (7 j) | 16,6 | 17,2 | oui | mauvaise (décantation du mélange : fibres + corindon) |

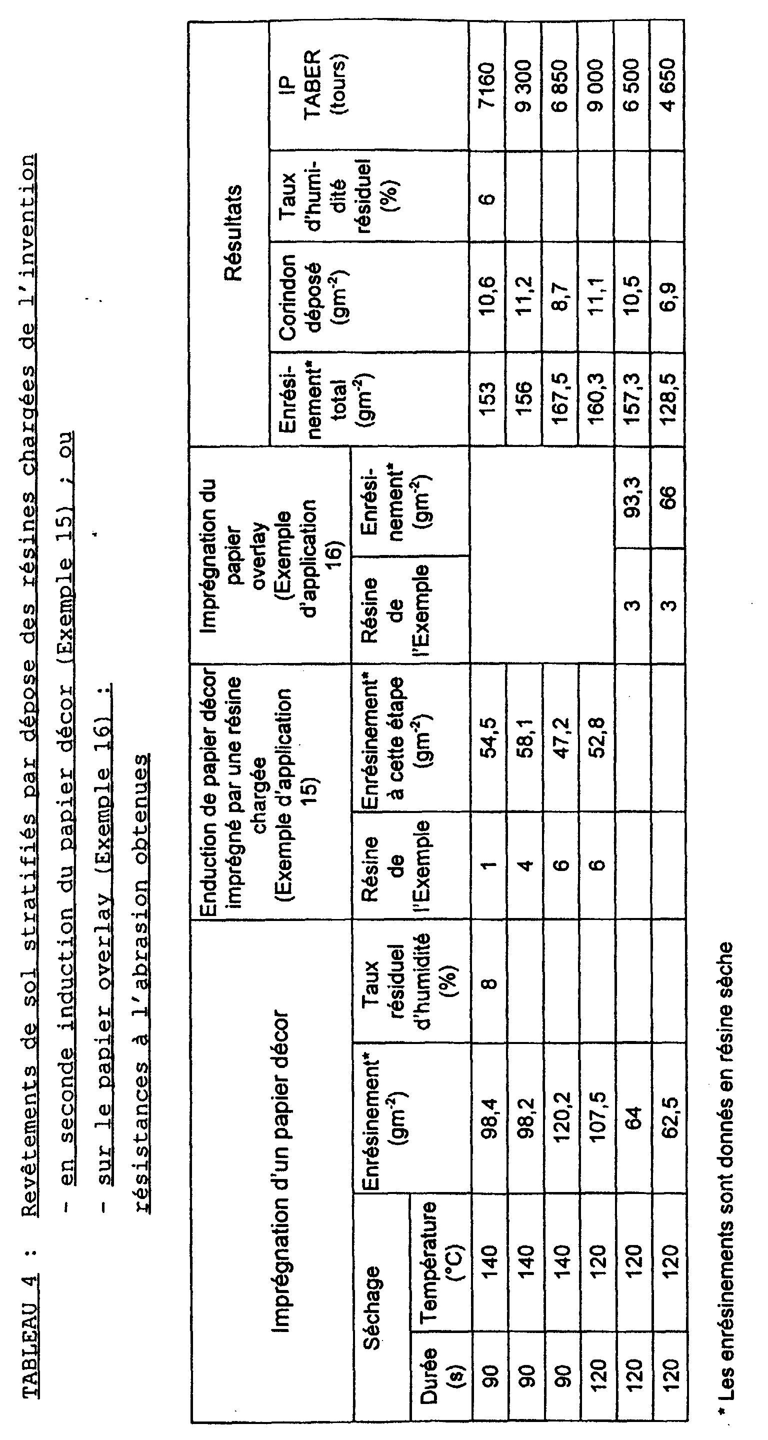

## Revendications

1. Résine d'imprégnation aminoplaste chargée avec au moins une poudre minérale anti-abrasion, caractérisée par le fait qu'y ont été ajoutés au moins une charge fibreuse et au moins un agent épaississant soluble ou dispersible à l'état colloïdal dans ladite résine, la nature et la quantité de la ou des charges fibreuses et du ou des agents épaississants étant choisies pour que le système résine aminoplaste + charge minérale anti-abrasion ainsi modifié présente un comportement rhéologique pseudo-plastique ou essentiellement pseudo-plastique.

2. Résine d'imprégnation aminoplaste selon la revendication 1, caractérisée par le fait que la ou les charges fibreuses et le ou les agents épaississants sont choisis pour que le système résine aminoplaste + charge minérale anti-abrasion ainsi modifié présente simultanément :
- une viscosité au repos au moins égale à 50 000 mPa.s à 0,07 s⁻¹ ;
- une viscosité au plus égale à 1000 mPa.s à 1000 s⁻¹ ; et
- une remontée en viscosité rapide dès que le cisaillement cesse.

3. Résine d'imprégnation aminoplaste selon l'une des revendications 1 et 2, caractérisée par le fait que la résine aminoplaste de base est une résine mélamine-formol, en particulier une résine mélamine-formol ayant les caractéristiques suivantes :
• F/NH₂ = 0,45 - 0,60
• Extrait sec à 105°C = 55 - 65%
• Viscosité = 50 - 150 mPa.s à 20°C
• pH = 9,5 - 10,5.

4. Résine d'imprégnation aminoplaste selon l'une des revendications 1 et 2, caractérisée par le fait que la résine aminoplaste de base est une résine urée-formol, en particulier une résine urée-formol ayant les caractéristiques suivantes :
• F/NH₂ = 0,5 - 0,8
• Extrait sec = 45 - 55%
• Viscosité = 20 - 100 mPa.s à 20°C
• pH = 7 - 9.

5. Résine d'imprégnation aminoplaste selon l'une des revendications 3 et 4, caractérisée par le fait que la résine de base n'est pas diluée dans l'eau.

6. Résine d'imprégnation aminoplaste selon l'une des revendications 1 à 5, caractérisée par le fait que la ou les poudres minérales anti-abrasion sont des poudres ayant une dureté au moins égale à 7 en échelle Moh.

7. Résine d'imprégnation aminoplaste selon l'une des revendications 1 à 6, caractérisée par le fait que la ou les poudres minérales anti-abrasion sont choisies parmi les silices cristallines et les corindons.

8. Résine d'imprégnation aminoplaste selon la revendication 7, caractérisée par le fait que la poudre minérale anti-abrasion est un corindon à grains équiaxes de diamètre moyen compris entre 10 et 125 µm, de préférence entre 25 et 75 µm, le cas échéant en mélange avec un corindon de même type mais de granulométrie plus fine, de préférence entre 1 et 5 µm, le corindon de granulométrie plus fine représentant moins de 15% en poids du corindon total.

9. Résine d'imprégnation aminoplaste selon l'une des revendications 1 à 8, caractérisée par le fait que la ou les poudres minérales anti-abrasion sont présentes à raison de 5 à 30% en poids par rapport à la résine chargée à rhéologie modifiée.

10. Résine d'imprégnation aminoplaste selon l'une des revendications 1 à 9, caractérisée par le fait que la ou les charges fibreuses ont une longueur moyenne comprise entre 50 et 200 µm.

11. Résine d'imprégnation aminoplaste selon l'une des revendications 1 à 10, caractérisée par le fait que la ou les charges fibreuses sont choisies parmi les fibres coupées de cellulose α et les fibres de cellulose microcristalline.

12. Résine d'imprégnation aminoplaste selon l'une des revendications 1 à 11, caractérisée par le fait que la ou les charges fibreuses sont présentes à raison de 5 à 15% en poids par rapport à la résine aminoplaste de base seule.

13. Résine d'imprégnation aminoplaste selon l'une des revendications 1 à 12, caractérisée par le fait que le ou les agents épaississants sont choisis parmi les éthers cellulosiques, présents à raison de 0,05 à 1% en poids, de préférence de 0,1 à 0,5% en poids, par rapport à la résine aminoplaste de base seule.

14. Résine d'imprégnation aminoplaste selon l'une des revendications 1 à 12, caractérisée par le fait que le ou les agents épaississants sont choisis parmi les celluloses microcristallines colloïdales, présentes à raison de 0,1 à 5% en poids, de préférence de 0,5 à 1% en poids, par rapport à la résine aminoplaste de base seule.

15. Résine d'imprégnation aminoplaste selon l'une des revendications 1 à 14, caractérisée par le fait qu'elle comprend en outre au moins un additif choisi notamment parmi les agents mouillants ou tensio-actifs, les promoteurs d'adhésion, les lubrifiants liquides ou solides, les agents anti-statiques.

16. Résine d'imprégnation aminoplaste telle que définie à l'une des revendications 1 à 15, à laquelle on a incorporé au moins un durcisseur latent, à raison notamment de 0,1 à 1% en poids par rapport à la résine aminoplaste de base seule.

17. Résine d'imprégnation aminoplaste selon la revendication 16, caractérisée par le fait que le ou les durcisseurs latents sont choisis parmi les sels d'acides minéraux ou organiques neutralisés par une base.

18. Revêtement stratifié obtenu par pressage à chaud sur un support d'un papier opaque portant un motif décoratif imprimé, ou papier décor, ledit papier décor pouvant être recouvert par au moins un papier transparent de protection, ou papier overlay, au moins l'un parmi le papier décor et le ou les papiers overlay ayant été enduit, le cas échéant en seconde enduction, par une résine aminoplaste d'imprégnation telle que définie à l'une des revendications 16 ou 17.

19. Revêtement stratifié selon la revendication 18, caractérisé par le fait que le papier décor a été préalablement enduit par une résine aminoplaste d'imprégnation comportant un durcisseur latent, la résine aminoplaste d'imprégnation telle que définie à l'une des revendications 16 ou 17 étant appliquée en seconde enduction sur le papier décor préalablement enrésiné et partiellement séché.

20. Revêtement stratifié selon l'une des revendications 18 ou 19, caractérisé par le fait que le papier overlay est enduit par la résine aminoplaste telle que définie à l'une des revendications 16 ou 17 en première imprégnation.
